# EUROPEAN PATENT SPECIFICATION

(11) **EP 0 370 101 B1**
(45) Date of publication and mention of the grant of the patent: **15.07.1998**
(21) Application number: 89906617.9
(22) Date of filing: 18.05.1989
(51) Int. Cl.: G06F 3/023, G06F 3/033, G06F 17/60

(54) **APPARATUS FOR MANIPULATING DOCUMENTS IN A DATA PROCESSING SYSTEM**
VORRICHTUNG ZUR HANDHABUNG VON DOKUMENTEN IN EINEM DATENVERARBEITUNGSSYSTEM
DISPOSITIF DE MANIPULATION DE DOCUMENTS DANS UN SYSTEME DE TRAITEMENT DE DONNEES

(30) Priority: 27.05.1988 US 200091; 16.09.1988 US 245419; 01.11.1988 US 265685
(43) Date of publication of application: 30.05.1990
(73) Proprietor: KODAK LIMITED, Hemel Hempstead Herts, HP1 1JU (GB)
(72) Inventor: LEVINE, Stephen, R., North Andover, MA 01845 (US); HARUI, Alex, J., Derry, NH 03038 (US); SCHIRPKE, Michael, W., Bedford, MA 01730 (US); DONOGHUE, Karen, Melrose, MA 02176 (US); AJGAONKAR, Donna, Carlisle, MA 01741 (US)
(74) Representative: Rackham, Stephen Neil
(86) International application number: US8902158
(87) International publication number: WO8911696

(56) References cited:
- EP-A- 0 159 400
- JP-A-60 218 128
- US-A- 4 633 436
- US-A- 4 677 428
- US-A- 4 714 918
- US-A- 4 755 809
- BYTE April 1982, pages 242 - 282 DAVID CANFIELD SMITH 'DESIGNING THE STAR USER INTERFACE'
- RESEARCH DISCLOSURE no. 284, December 1987, NEW YORK, NY, USA page 778 , XP22021 'RUBBER CURSOR'
- D. WESTON, "The Complete Book of Macintosh" Assembly Language Programming Volume II, published 1987, by Scott, Foresman and Company, pages 27-147, especially pages 45, 48-74, 82-85, 132-146.
- G. WILLIAMS, "The Apple Macintosh Computer: Mouse-Window-Desktop" Technology Arrives for under $2500; BYTE Magazine, February 1984, pages 30-54
- L. TESLER, "The Smalltalk Environment" BYTE Magazine, August 1981, pages 90-144
- IBM Technical Disclosure Bulletin, Volume 31, No. 1, June 1988, "Method of Multiple Selection of Icons on a Computer Display by using a Pointing Device", pages 19,20
- G. WILLIAMS, "The Lisa Computer System: Apple Designs a New Kind of Machine" BYTE Magazine, February 1983, pages 33-50

## Description

### Background of the Invention

In many of today's businesses, various tasks are not automated by computers. For instance, a word processor enables the reorganizing the rewriting of documents without the retyping known in the past. In addition, various documents may be organized and stored by a computer filing system which allows retrieval by name, by chronological or alphabetical order, or by other user-desired identification. Another example is a mail system on a network of computer terminals which allows messages to be sent to and from users of the network. Also, a phone system may be connected to a mail system which in turn enables phone messages to be stored and later forwarded to users. These and other computer devices enable various daily office tasks to be accomplished more quickly and more efficiently.

However, most computer devices require the user to be computer literate and to learn commands to direct the computer to perform the desired tasks. In more recent computer developments, user interaction with the computer, or as generally referenced in the art, the user interface, comprises menus or a series of commands from which to choose. For each decision juncture during the use of a computer device, an appropriate menu is displayed to the user on the available, proper commands at the juncture. The user only needs to choose the command from the menu which will direct (in part or in full) the computer to perform the desired task. Due to the menu providing the proper possible commands, the user does not have to remember or recall commands to the computer. Hence, the menus are considered to make computer devices more "user friendly".

Although, the choices on a menu generally are descriptive phrases written in terms which are more common to our everyday language rather than in a coded or technical computer language, the descriptive phrases may not initially have meaning, or at least the proper meaning, to a first-time user or a user who is not computer literate. The user does have to learn the respective meaning of each menu choice.

In addition, the input devices through which the user communicates commands or menu selections to the computer pose various complexities. For example, a keyboard requires knowledge of the position of each key in order for a user to use the keyboard proficiently. A mouse, being a relative movement device, requires certain eye-hand coordination and is operated by unnatural movements such as single and double clicking at appropriate times which must be remembered by the user.

An example of a computer using a mouse as input device is described in Byte, April 1982, Pages 242-282, "Designing the Star User Interface" by D.C. Smith.

In turn, many office personnel do not make use of computer devices because of the time and complexity in learning to operate these devices.

Accordingly, there is a need to make computer devices, and particularly those for office use, more "user friendly" and readily useable especially to first-time and computer illiterate users.

According to this invention a data processing apparatus comprises:
processing means;
display means responsive to the processing means for displaying a document and entities, said entities including at least a plurality of cursors, an image entity which represents said document and which is an actual image of one page of said document reduced in size, and an icon representing a function entity which is user selectable to specify an operation to be performed by the processing means; and,
an input device coupled to the processing means for specifying positions on the display means and for selecting the operations to be performed by the processing means,
wherein manipulation of the input device enables the display to simulate the manipulation of the document which is displayed as said actual image of said document reduced in size by causing movement of said reduced size image of said document and of an icon representing a function entity relative to one another on the display until they overlap to enable the processing means to carry out the operation function represented by the icon on the document represented as said actual image of said document reduced in size, the processor means causing a selected one of the cursors to be displayed as required by the position and operation indicated by the manipulation of the input device.

The disclosed apparatus may be employed as a terminal or a network of terminals of a digital processing system. Each terminal typically provides a monitor screen which displays various views to the user, a keyboard which enables typed input to the processing system, and an electronic stylus which enables further user interaction with the digital processing system but in a natural format. For each terminal, an audio input/output assembly may also be connected to the terminal to provide audio input to the digital processing system. In addition, each terminal may be connected to a printer, a scanner and/or a facsimile transmitter and receiver.

When the input device is an electronic stylus, the user interacts with the processing system in four methods of use of the stylus. An electronic tablet serves as a writing surface on which the stylus is used and spatially corresponds in a one-to-one fashion with the view exhibited on the monitor screen. Other surfaces including the monitor screen may alternatively serve as the writing surface. The first method of use of the stylus, referred to as "touch and lift", enables the selection of a displayed item. One end of the stylus is touched on and removed from the position on the tablet corresponding to the position of a desired item displayed on the monitor screen as indicated by a cursor. The "touch and lift" use of the stylus mimics the familiar press and release motion one employs when making a selection from a machine with depressible buttons.

In a second method of use, one end of the stylus is moved across the surface of the tablet, while in contact therewith, to move a displayed item to a different position in the screen view as indicated by a cursor. Such a method of use, to obtain the described effect, is intuitive to even the most unfamiliar user and is referred to as the "touch and move" method of use. In a third method of use, the user writes with a writing tip end of the stylus in the same manner as he would write with a pencil or pen. Such writing provides annotations to a displayed document or creates a new document. The fourth method of use involves an eraser end of the stylus and provides for the erasure of annotations generated by the writing tip end. The eraser end is used in the same manner as a pencil top eraser. Thus, the third and fourth methods of use of the stylus provide the most commonly expected results. Because the foregoing uses of the stylus consist of known movements and strokes with which any person is familiar and comfortable, and which produce naturally expected results, interaction with the processing system through the stylus and tablet is easily and naturally accomplished.

In accordance with the present invention, a screen view of a computer work area called the user system desk, distinguished from the user's office desk and displayed on the terminal monitor screen, provides a representation of all the documents and accessories which are currently at the users disposal. The image entities which represent the documents are miniaturised or reduced images of one page of the document. The reduced images are subsequently referred to as stamps and each stamp serves as a unique direct representation, that is, an actual image or pictorial likeness of one page of a certain document on the user system desk as opposed to an indirect symbolic indication such as a prefabricated standard icon of prior art.

On the other hand accessories which are currently at the users disposal are represented by icons. The icons and stamps are user movable by the touch and move operation of the stylus,

Although the stamps are user stackable on top of each other with multiple use of the touch and move operation, the icons are only able to be placed on the top of the stamps. Placing a stamp on an icon causes the monitor screen to be automatically redrawn such that the icon is shown positioned on top of the stamp.

In another feature of the present invention the stamps are user stackable to form aligned stacks. Upon the user positioning one stamp on top of the other within certain limits (e.g., covering 20%, 40% or 80% of a stamp) the processor automatically forms an aligned stack of the two stamps. The limit within which automatic alignment is activated, is preferably user settable in the manner that other program-defaults for the user are set.

Each icon represents a function entity and hence a particular accessory.

Operation of that accessory is activated upon the user positioning a stamp and the icon adjacent to each other by the touch and move operation of the stylus on the writing surface. Preferably operation of the accessory represented by the icon is initiated at the lifting of the stylus from the writing surface after positioning the icon and stamp adjacent to each other. Associated with some icons is a series of screen views which further determine the operation of the accessory represented by the icon. In particular, when a stamp is positioned adjacent or on a copy machine icon in the desk view, the processor provides a screen view of a control panel for the user to specify limits of the copy operation to be performed. Using the stylus to select the number of copies,lightness or darkness of copies and/or other features as done at an actual copy machine. Upon selection of a "start button" displayed in the screen view, the processor performs the copy operation within the parameters defined by the users selection.

To further aid the user in operating the stylus to interact with the desk view, one of a plurality of cursors is provided in the screen view before the stylus makes contact with the writing surface. To accomplish this, proximity of the stylus along an axis perpendicular to the writing surface is sensed. When an end of the stylus is within a predefined proximity along the perpendicular axis, the processor generates a cursor on the monitor screen in a position corresponding to the proximal position of the writing surface.

### Brief Description of the Drawings

The foregoing and other objects, features and advantages of the invention will be apparent from the following more particular description of a preferred embodiment of the invention, as illustrated in the accompanying drawings. The drawings are not necessarily to scale, emphasis instead being placed upon illustrating the principles of the invention.

Figure 1a is a schematic view of a data processing system which embodies the present invention.

Figure 1b is a longitudal section of a two-ended stylus employed in the data processing system of Figure 1a which may be cordless or wired to a tablet.

Figure 1c is a blocked diagram of a table employed in the system of Figure 1a.

Figure 2 is an illustration of a desk view displayed during use of the system of Figure 1a.

Figure 3 is an illustration of a desk view in which stamps of documents are being stacked by user.

Figure 4 is an illustration of the desk view during operation of a printer icon.

Figures 5a through 5b are block diagrams of the database used in the desk view of the system of Figure 1a.

Figure 6 is a flow chart of a supervisor task for implementing operation of a desk application of the system of Figure 1a.

Figure 7 is a flow chart of a tablet task for implementing the desk view of the system of Figure 1a.

### Detailed Description of a Preferred Embodiment

Generally speaking, the present invention discloses a graphically based user interface in a computer device which simulates a desk referred to as the user system desk, and user interaction with items on the desk. In a major screen view of the interface (hereinafter "desk view"), the desk is illustrated with "paper" documents, trays and/or folders for holding documents in user desired order, and various accessories, such as but not limited to, a stapler, mailing means, a trash barrel, a printer, and a copy machine. All items on the illustrated desk are movable and are able to be placed in any position on the desk by movements of a stylus on a writing surface which mimic human motions of grabbing an item, moving an item, and point to an item to establish selection of an item. The items are indicated on the screen view of the user system desk by icons or illustrated representations, and movements of the stylus with respect to an item are indicated in the screen view by various cursors.

In particular paper documents are illustrated on the user system desk by reduced images called stamps, and items which provide a process or activity are represented on the user system desk by icons. Some icons provide the associated process or activity upon the icon being moved to a stamp of a desired document. Other icons provide the associated process or activity upon a stamp of the desired document being moved to the icon.

The foregoing and other features of the present invention are described in more detail and are more readily understood with reference to a data processing system which embodies the present invention and which is illustrated in Figure la. The data processing system 20 includes a computer terminal 10 with a keyboard 12 and a display unit 18, a two-ended electronic stylus 14 and an electronic tablet 16, all of which are connected to and driven by a digital processor 22. Digital processor 22 may be of a multi-task type but a single task type is assumed in the description of the preferred embodiment. Preferably an audio assembly having an input and output port such as a telephone set 24, is also connected to the terminal 10 for combining audio information with visual information input through the stylus and keyboard 12. In addition, a facsimile and/or network transmitter and receiver 51 is coupled to terminal 10 for providing further communication means.

The stylus 14 is used on an upper planar surface of the tablet 16 to perform certain tasks such as repositioning displayed items, or selecting a displayed item for further processing. The actions of the stylus 14 on the surface of the tablet 16 are representatively displayed on the display unit 18 and the positions on the table have a one-to-one correspondence with the view 26 displayed on the display unit 18. Thus as the user applies the stylus 14 to the tablet surface, an image representation of what the user is doing with the stylus is provided in the view 26 of display unit 18.

In the alternative, the tablet and display unit 18 may be a single unit such that the stylus 14 is operated directly on the screen of the display unit 18.

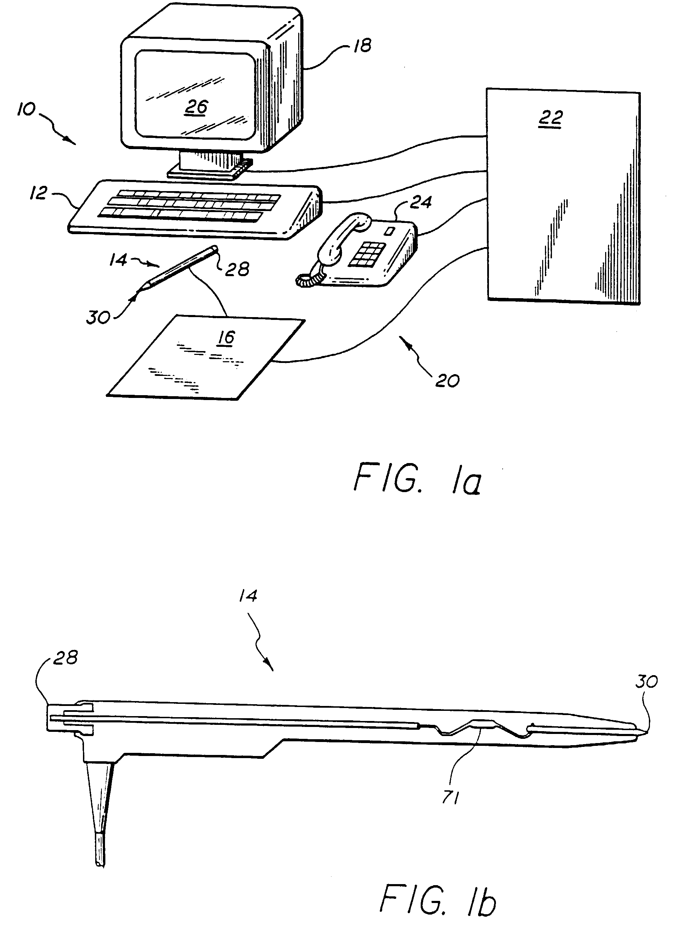

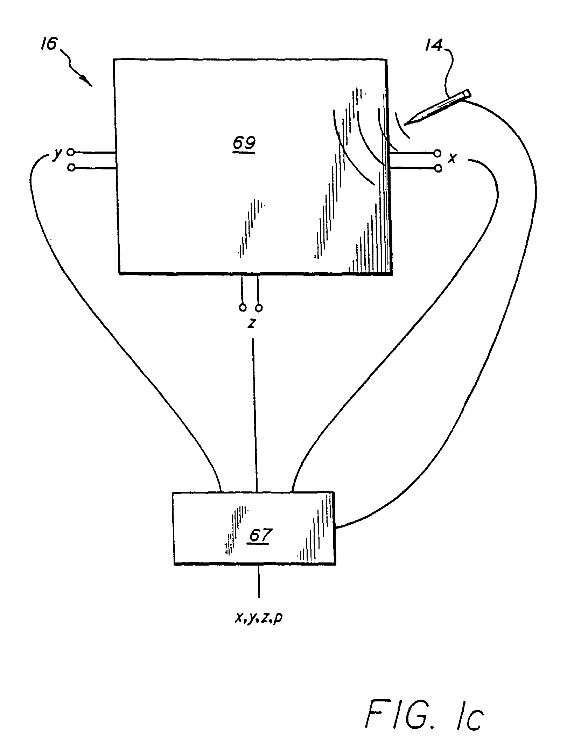

The electronic stylus 14 and tablet 16 are generally of the type common in the art. In particular, the tablet 16 includes a grid of conductive elements, and the stylus 14 contains an electric coil. The coil end of the stylus 14 is inductively coupled to the grid in the tablet 16 by energizing either the coil or the grid with an AC voltage signal. The voltage signal induced in the other component is then measured and used to determine the position of the stylus 14 relative to the grid. The unique features of the electronic stylus 14 and tablet 16 of the present invention are presented next in conjunction with Figures 1b and 1c.

The two-ended stylus 14 operates from either end, the writing tip end 30 or the erasure end 28. When in close proximity (about 2 centimeters or less) to the surface of the tablet 16, the writing tip 30 is sensed and indicated in the view 26 of display unit 18 by a cursor. Two factors are used in sensing the proximity of the writing tip 30 of the stylus 14 to the surface of table 16. The factors include a height position on an axis perpendicular to the tablet surface (i.e., z axis) as detected by circuit 69 in Figure 1c of the tablet 16 and a pressure indication sensed by a pressure transducer 71 in Figure 1b in the stylus 14. The same factors are used in determining the proximity of the erasure end 28 of the stylus 14 to the table surface, pressure of the erasure end 28 also being detected by pressure transducer 71. When the erasure end 28 is in proximity of the tablet surface and not necessarily in contact therewith, an indication, such as a cursor depicting a pencil top erasure, is displayed in the view 26 of display unit 18 at the position corresponding to the position of the stylus erasure end 28 on the tablet surface. For reasons discussed below, independent z axis and stylus end pressure factors are determined.

To accomplish the foregoing, the tablet 16 comprises an x and y axis sampling circuit, where x and y are orthogonal axes in the plane of the tablet surface, and a separate z axis sampling circuit.

It is understood that a multiplicity of loop configurations for the sensing coils forming the x and y axis and the z axis sampling circuits are known in the art. Hence, Figure 1c provides a block diagram of tablet 16 with blocked area 69 generally referring to the sensing coils of the x and y axis and z axis circuits. It is noted, however, that positional phase discrepancies of the tablet sensing coils can be corrected computationally in tablet processor 67 or by a higher resolution loop such as a separate z axis sensing loop used in the present invention. The x and y axis and z axis sampling circuits operate on a predetermined schedule and generate signals at at x, y and z in Figure 1c. The signals are subsequently received and digitized into respective quantitative values by tablet processor 67. The digitized values are used by processor 22 of Figure la in a relationship known in the art to provide an indication of position of the stylus 14 relative to the tablet 16 along the x, y and z axes.

In the preferred embodiments, the z axis sampling circuit senses stylus end height and transfers indicative signals to tablet processor 67 which transmits z axis height values to processor 22. Along with the z axis values, tablet processor 67 transmits to processor 22 quantitative, multivalue pressure measurements p (Figure 1c) and corresponding x and y values for the stylus end. The processor 22 uses the transferred height and pressure values to determine proximity of the stylus end in relation to the tablet surface. It is noted that such a determination is based on multivalue, quantitative measurements in contrast to ualitative, yes/no indications used in existing devices.

In addition, the writing tip end 30 and the erasure end 28 of the stylus are alternately driven by tablet processor 67 of Figure 1c. When one end is moved into and sensed in proximity of the tablet surface, then just that end is driven. The driven stylus end responds to four different manners of operation to provide four different effects. A "touch and lift" operation is used for selecting an item exhibited on display unit 18. Preferably, once the writing tip end 30 or the erasure end 28 makes contact with the tablet surface, the "touch" part of the operation is defined, but the user must lift the stylus end 28, 30 from the tablet surface within the succeeding second or so to define the "lift" portion of the operation. If the user delays in lifting stylus end 28, 30, then the "touch and lift" operation is not invoked, and no effect results.

A "touch and move" manner of operation enables the user to move a displayed item anywhere in the view 26 of display unit 18. The operation is invoked upon the user placing the writing tip end 30 or the erasure end 28 on the tablet surface and moving the stylus end 28, 30 while maintaining it in contact with the tablet surface for more than a preset number of pixels, for example, four pixels.

The third and fourth manners of operation depend on the stylus end being driven. In the case of the writing tip end 30 of the stylus 14, use of the end 30 in a writing manner inserts markings on a chosen displayed "writing" area. In the case of the erasure end 28 being driven, erasing with the erasure end 28 deletes certain writing tip end markings or portions thereof. Whether movement of the stylus causes writing/erasure or movement of an item depends on whether a writing surface is displayed and whether the cursor is at the edge or center of the writing surface.

Optionally, the stylus 14 may be of other designs, for example, single working ended. In that case, erasure may be provided through keyboard operations or the like.

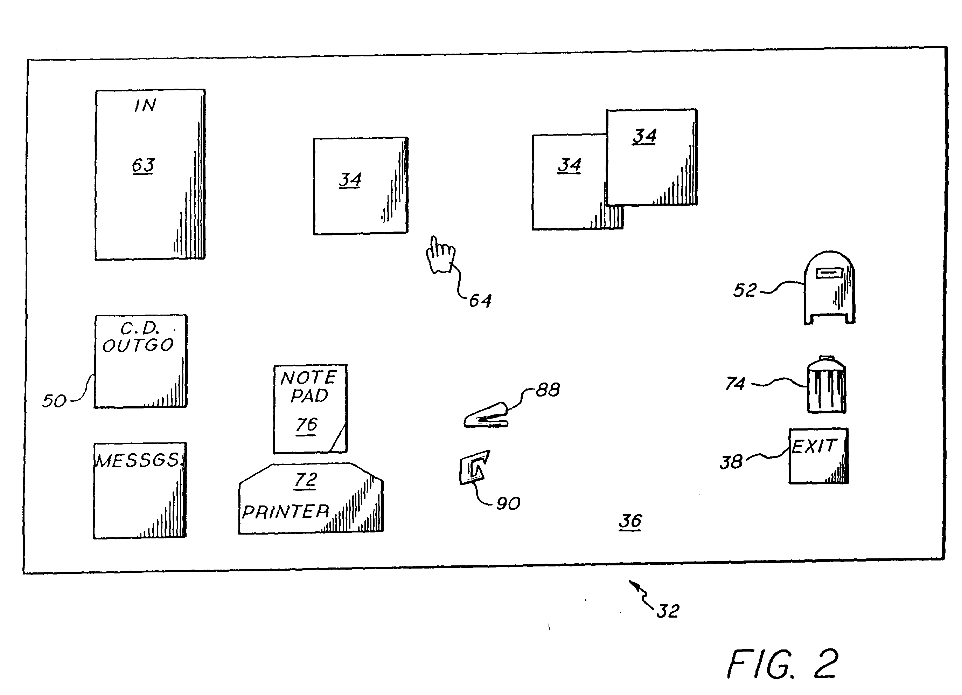

Cursor indications for the above described operations of the stylus 14 on tablet 16 are provided by known methods but are displayed when a stylus end enters the sensed proximity of the tablet surface in contrast to when the stylus end makes contact with the tablet surface. In the preferred embodiment, a cursor replicating a sharpened pencil tip is displayed when a writing surface is displayed, and the writing tip end 30 of stylus 14 is in proximity of the tablet surface and thereafter used for writing. An erasure top cursor is displayed when the erasure end 28 of the stylus 14 is in proximity of the tablet surface and thereafter used for erasing. As generally shown in Figure 2, a cursor 64 replicating a hand with the index finger positioned in a pointing fashion is displayed when a writing surface is not displayed and either end of the stylus 14 is in proximity and thereafter used in the "touch and lift" method for selecting a displayed item. The cursor 69 moves in correspondence with movement of stylus 14 while the stylus end is in proximity of the tablet surface and during operation in the "touch and lift" manner.

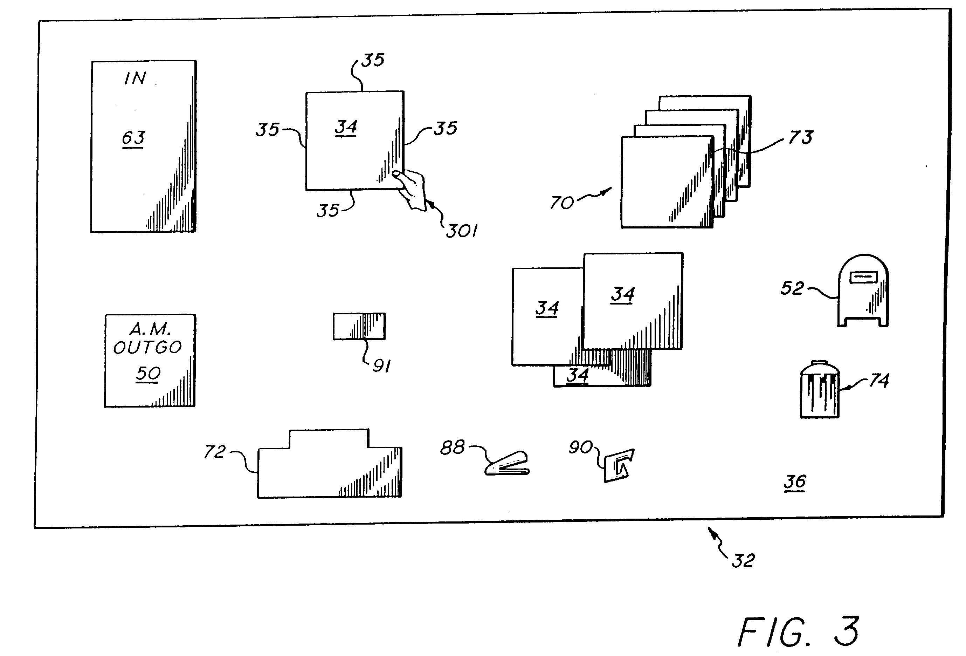

A close-fisted hand cursor 301 is displayed upon either end of the stylus 14 making contact with the tablet surface and thereafter used to grab and move a displayed item in the "touch and move" method of use shown in Figure 3. Specifically, the cursor 301 may be used to grab a document stamp, tray or accessory on the desk, or may be used to grab the edge of a displayed writing surface to move the surface. Other cursors may be used to provide the illustrative indication of the manners in which stylus 14 is being used.

As illustrated in Figures 2 and 3, the desk view 32 is central to the various tasks and applications of the system 20 and serves as a visual portion of the interface between the user and the digital processor 22. In a preferred embodiment, the desk view 32 provides a user's system desk 36 which represents the computer work area of the user and appears as the background of the desk view 32. On the system desk 36, the desk view 32 provides miniaturized images or stamps 34 of various documents which have been created and/or annotated by annotation capabilites of system 20, some documents of which originated from a screen capture of the view displayed during interruption of a previously running program. Although the stamp representations of the documents are specifically similar to icons, the stamps 34 are more functional and informative than icons. In particular, various direct treatment and direct manipulation of stamps 34 in desk view 32 are accomplished by applying the different stylus operations to the stamps.

For instance, stamps 34 of a user's document may be directly moved around on the system desk 36 by the user operating the writing tip end 30 or erasure end 28 of stylus 14 in the "touch and move" manner with respect to any region within bounds of the stamps 34 shown in Figure 3. That is, to reposition stamp 34, the user points with and places an end 28, 30 of stylus 14 on a position on the tablet surface which corresponds to a position on or enclosed within border 35 of the desired document stamp 34 as displayed in the desk view 32. The user then drags the stylus end 28, 30 across the surface of tablet 16 to the desired position on tablet 16 which corresponds to the desired ending position in the desk view 32, and removes the stylus end 28, 30 from the tablet surface. During the dragging of the stylus end 28, 30 across the tablet surface, the display unit 18 shows the stamp 34 of the desired document being moved from its initial position through various intermediate positions to the desired position on the system desk 36 in correspondence with the dragging of the stylus end across the surface of the tablet. When the user lifts the stylus end 28, 30 off the tablet surface, the user stops operation of the stylus in the "touch and move" manner and thus ends the ability to move the document stamp 34 on the system desk 36.

Preferably, the cursor 301 depicting a close-fisted hand is illuminated adjacent one side of the document stamp 34 by which the stamp appears to be moved as shown in Figure 3. The close-fisted hand cursor 301 and adjacent document stamp 34 move in the same pattern along the desk view as the stylus end 28, 30 moves along the tablet surface.

By multiple use of the "touch and move" operation described above, document stamps 34 may also be stacked in certain desired groups established by the user. In stacking the stamps 34, if the outer edge of the borders 35 of any two partially stacked stamps are within a predefined distance apart from each other, then processor 22 automatically aligns the two stamps to form an aligned stack 70 shown in Figure 3. Any other stamps 34 placed on stack 70 within the predetermined border edge limits are also automatically aligned with the rest of the stamps in stack 70. Other aligned stacks 70 may similarly be formed.

The graphical representation of the automatic aligning of stamps 34 is referred to as "snapping to" because the stamps within the predefined side region limits of each other appear to cooperate with each other in a manner which quickly positions one exactly on top of the other. As the stack 70 grows, incremental offsets between stamps of the stack are provided to provide a 3-D illustration of the stack.

Known routines in the algorithms are used to provide the automatic alignment of stamps and to provide the 3-D illustration of the formed stack of stamps. In a preferred embodiment of the present invention, however, the routine employs a variable to determine the predefined border edge limits at which automatic alignment is invoked. The value of the variable is user settable through a system management routine which enables the user to predefine program defaults and the like.

In addition to the various stamps 34 of documents, various icons are provided in desk view 32 which represent operations of processor 22 that the user can elect to perform from system desk 36. The icons provide indications of various accessories such as, but not limited to, a mailbox 52, a printer 72, a stapler 88 and a copy machine 91. Using the "touch and move" operation of the stylus 14, the user moves an icon of an accessory or a stamp 34 of a desired document and positions each relative to the other. Some icons initiate operations of processor 22 by the placing of the icon on a stamp 34 of a desired document. Other icons initiate operations of processor 22 by a stamp being positioned on top of the icon. Specifically, the icon of the stapler 88 provides stapling of a previously aligned stack of stamps. Preferably, the user places an end of stylus 14 on the tablet position which corresponds to the sides of the stapler icon 88 and moves the stapler icon 88 with the "touch and move" operation of the stylus to the previously stacked stamps 34 which represent the documents desired to be stapled. Once the stapler icon 88 is positioned over the desired stack of stamps, the user lifts the stylus end 28, 30 from the tablet surface. Upon the lifting of the stylus end, the processor 22 staples the stamps 34 and corresponding documents of the subject stack. The stapler icon 88 is then automatically returned to its position in the desk view prior to the user moving it to the desired stack of stamps 34.

In the situation where the user positions a stamp 34 over stapler 88 in desk view 32, the processor 22 does not allow the stamp to remain on top of the stapler icon 88. Preferably, the processor 22 redraws the desk view 32 such that the stapler icon 88 is positioned on top of the stamp 34.

A staple remover icon 90 for removing staples is operated similarly to the stapler, and is similarly automatically redrawn on top of a stamp 34 when a user positions a stamp 34 over it.

In the case of the printer 72, mailbox 52 and copier 91, operation is as follows. Using the "touch and move" operation of the stylus 14 on a stamp 34 of a desired document, the user moves the stamp 34 and positions the stamp on the desired icon (printer 72, mailbox 52 or copier 91). After the user moves the stamp 34 onto the icon, and lifts the stylus end 28, 30 from the tablet surface, the processor 22 performs a routine to provide the respective process (mailing, printing or copying) of the document represented by the stamp 34. The process is performed through means connected to the user's terminal 10, such as electronic mail services a printer or a copy machine.

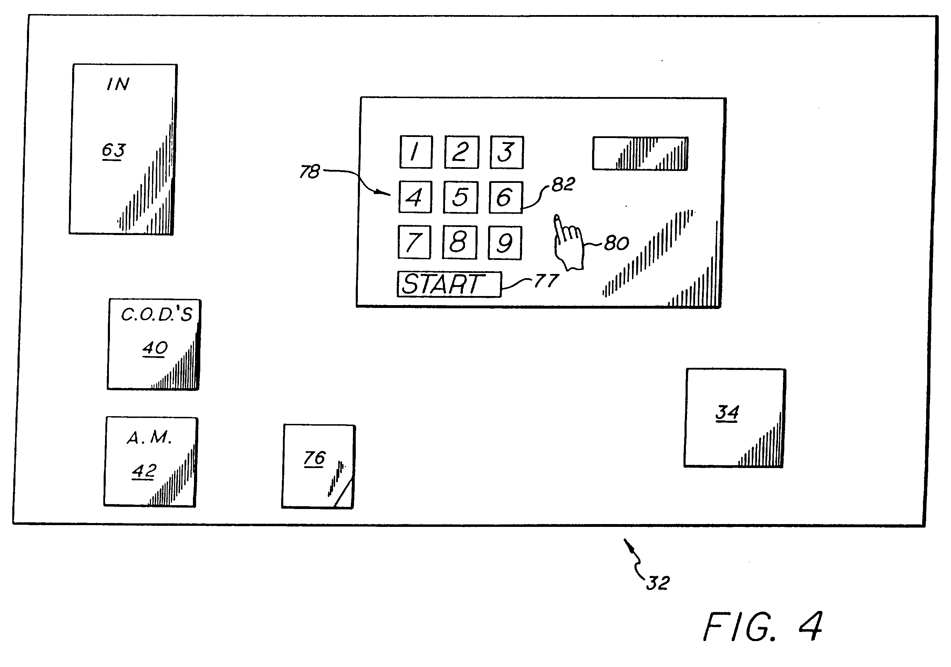

In the preferred embodiment, the lifting of the stylus end 28, 30 from the tablet surface after moving the stamp onto or adjacent the subject icon, initiates the respective process. Initiation of the respective process is illustrated to the user through the display unit 18 by a visual representation which corresponds to the chosen process/icon. In the case of the mailbox icon 52, an image of a mailbag is exhibited with a graphical indication of processor 22 inserting pieces of mail into the mailbag. In the case of the printer or copier icon 72, 91, an illustration of pushbutton control panel 78 shown in Figure 4 is displayed. Pushbutton control panel 78 mimics the control panels commonly employed by a typical photocopy machine or printer. The pushbutton control 78 is displayed to prompt the user to enter the number of copies desired to be generated. To select a desired number, the user uses the "touch and lift" method of use of one end of stylus 14 on the tablet position corresponding to the illustrated button 82 which designates the desired number of copies. A cursor 80 illustrating a hand with an extended index finger mimics the "touch and lift" motion of the stylus 14 and gives the illusion of the user depressing the desired button 82 as he would actually do on a photocopy or printing machine. After entering the number of desired copies, the user completes the request for document printing or copying by touching and lifting the stylus end on corresponding start button 77. Upon completion of a request for document printing or copying, the document is printed in paper form on a local printer connected to the processor 22 or copied within system 20. Thereafter, the corresponding stamp 34 is automatically returned to its initial position on system desk 36 prior to the request for printing or copying.

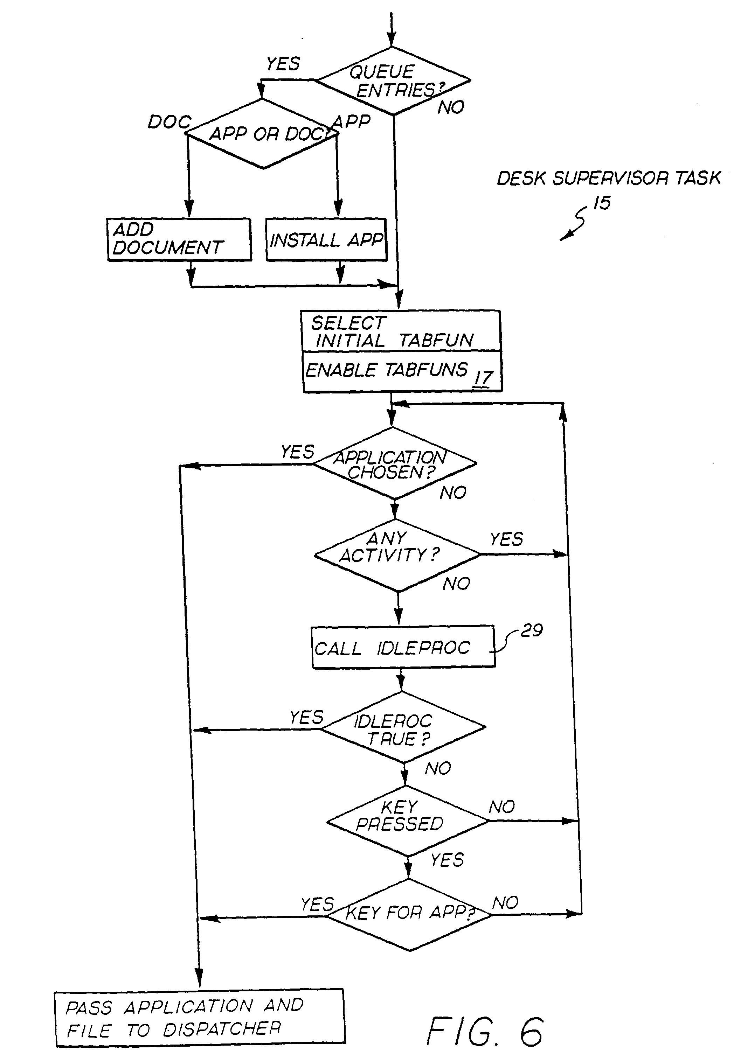

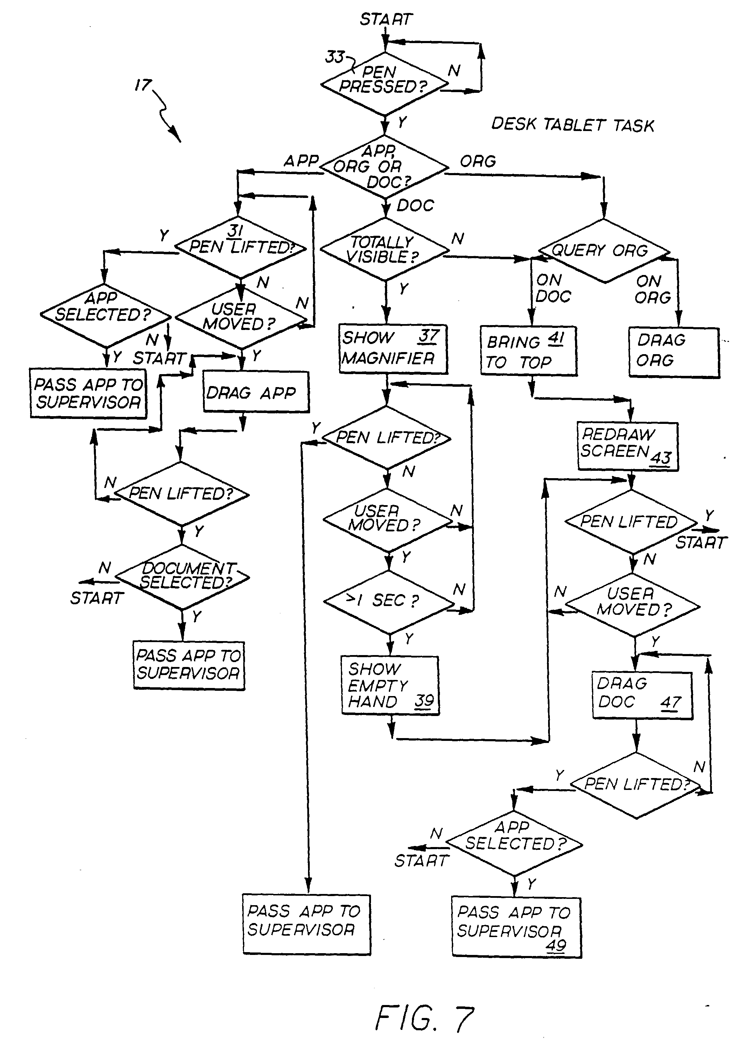

The foregoing features and operations of system 20 are provided by a desk application routine and a desk database. The desk application routine is formed of two subroutine tasks, the supervisor task 15 of Figure 6 and tablet state diagram task 17 of Figure 7. The supervisor task 15 and tablet task 17 share and manipulate the desk database which holds information that keeps track of the items currently on the user system desk 36.

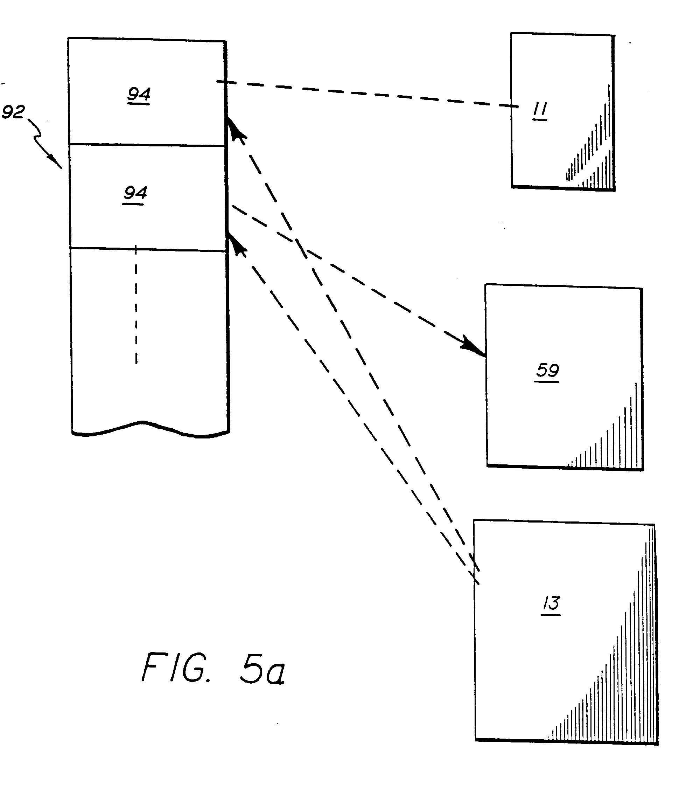

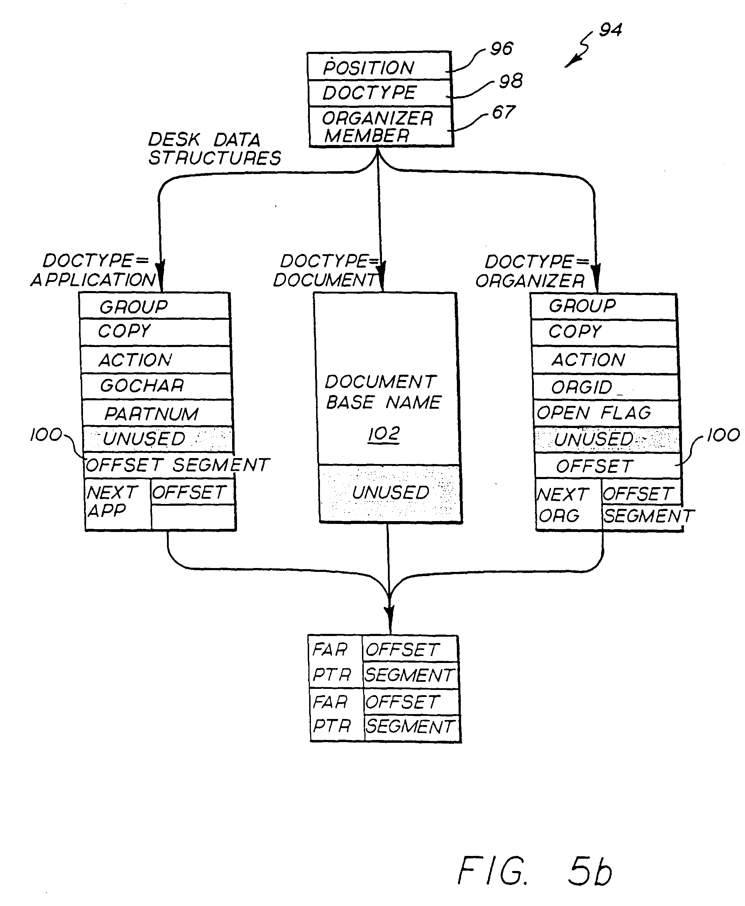

Specifically as illustrated in Figure 5a, the desk database comprises a doubly linked list 92 for indicating attributes of each item in the desk view 32, a file 11 of stamp images, and icon file 59 containing the various icons used to represent the other desk items, and a file 13 in which the bit map of the current desk view 32 is stored. Each entry 94 in doubly linked list 92 describes an item in the desk view 32.

In particular as shown in Figure 5b, each entry 94 specifies in respective fields 96, 98 the position of the item in the desk view 32, and whether the item is a document stamp, tray icon, icon for an aligned stack of stamps, icon of a depository, or an accessory icon. Also a placement field 60 specifies whether the item is currently positioned in a tray, folder or other holding device. If the item is a stamp, the placement field 60 also indicates whether the stamp is on top of or in a stack, or not included in any stack. Also depending on the type of item indicated in type field 98, the processor 22 attributes certain predefined characteristics to the item such as the class of moveable icon (desk tool, activate with stamp, activate without stamp) as designated in allocated fields. To that end, if a stamp is indicated in type field 98, then the processor 22 does not allow the stamp to remain on top of icons of desk tools such as the stapler and staple remover. Preferably the processor 22 displays the desk tool icon automatically repositioned on top of the stamp after a user has placed a stamp on the desk tool icon.

The file location of the reduced image or icon of the item is specified in a respective field 100 (or is found implicitly through the physical memory address of the entry 94 in the case of a stamp) of entry 94 by an address or other indication of the associated position in the stamp file 11 or icon file 59. Further, in the case of a document stamp, a table of contents (called a superfile) listing all files, such as voice annotation files, visual annotation files and image files, of the corresponding document is locatable by the name provided in the name field 102.

The entries 94 are changeably linked in order of most recently used item at the top of the list 92 to least recently used item at the bottom of the list 92. Each entry 94 has a first link to the preceeding entry 94 and a second link to the succeeding entry 94, both links of which are used in ordering and reordering entries 94.

Now making reference to Figure 6 and the operation of the supervisor task 15 of the desk application, the basic purpose of the supervisor task 15 is to maintain the display of desk view 32. When an Applications Dispatcher gives control to the supervisor task 15, the supervisor task first determines if new documents and/or accessories and hence new stamps or icons need to be added to the system desk 36. If so the current bit map image 13 of the desk view 32 is updated and new entries in the desk list 92 for the new items are made accordingly. Once an updated display of the desk view 32 is provided on display unit 18, the supervisor task 15 adds to the In Box 63 of the user's system desk 36 the stamps 34 and/or icons of the newly received files from other applications such as an annotator application, and enables the tablet task 17 (Figure 7). Thereafter, the supervisor task 15 monitors the keyboard 12 (Figure 1) for entry of requests for desired applications and monitors the tablet task 17 for activity. If there is no activity from either the keyboard 12 or the tablet 16 via tablet task 17 then the supervisor 15 checks for incoming mail and performs other procedures at 29 in Figure 6. If there is incoming mail or other user desired tasks to be performed (such as satisfying an order/request for a new item from the system catalogue of desk items), the supervisor task 15 passes the necessary files and control to the Applications Dispatcher. Upon return, the supervisor task 15 begins anew and puts the new mail and/or new items in the In Box 63 (or proper active desk tray in the case of some mail) and continues to monitor the keyboard 12 and tablet task 17.

When the tablet task 17 or signals from keyboard 12 indicate that the user has selected an accessory or processor operation other than a desk tool, the supervisor task 15 disables the tablet task 17 and passes to the Applications Dispatcher an identifier of the selected processor operation and the file of any document on which the processor operation is to operate. Thereafter the Applications Dispatcher processes the requested processor operation.

The tablet task 17 (Figure 7) follows the user's activity with the stylus 14 relative to tablet 16 while the stylus is in sensed proximity of the tablet surface and not necessarily in contact with the tablet surface. The tablet task 17 is responsible for determining which icon or stamp was selected, redrawing the necessary parts of the desk view 32, displaying an icon or stamp being moved, relocating the icon or stamp, and passing a selected non-desk tool processor operation (such as mail, printer and copier applications) to the supervisor task 15. The tablet task 17 also determines which method of use of the stylus 14 the user is currently using.

The flow chart of Figure 7 illustrates operation of tablet task 17. When a user places an end 28, 30 of the stylus 14 within sensing range of tablet 16, the tablet task 17 displays an empty handed cursor to represent the present activity of the stylus 14. When the user positions the stylus end 28, 30 on the tablet position corresponding to a stamp 34 or icon in desk view 32, the tablet task 17 tests at 33 in Figure 7 the pressure exerted on the active end of the stylus 14 to determine whether the user is intending to invoke a certain operation of the stylus 14 relative to the stamp 34 or icon. If the pressure exerted exceeds a predefined threshold then the tablet task 17 determines on which stamp 34 or on which type of icon (i.e. application or holding member such as a tray or folder) the stylus 14 is acting. This is accomplished by the tablet task 17 starting at the beginning of the linked list 92 (Figures 5a-5b) and checking each entry 94 to see if the current cursor position is within the bounds stated in the position field 96 of the entry. The first entry found to have the current cursor position within the bounds of the position field 96 is selected.

In the case of a stamp 34 being detected as the subject, the tablet task 17 then determines which method of use of the stylus 14 is being used by testing for an intersection of the boundary of the entry 94 with boundaries of all prior entries. If there are no intersections, the subject stamp 34 is determined to be fully visible (i.e. not within a stack but possibly on top of a stack) and the cursor is changed to a magnifying glass 37 indicating that the associated document will be displayed if the user lifts his/her hand within the next second. Such displaying is handled by the annotation application routine which is called by the supervisor task 15 after the supervisor task 15 receives control from the tablet task 17. If the user does not lift his/her hand within that second, then the cursor is changed to an empty hand 39.

If there are any intersections between the entry's boundary with that of any previous entries 94 in list 92, then the stamp 34 is under other stamps 34 or icons and must be made visible 41 (i.e. brought to the top of the stack in which it lies). In the case of a holding member being the detected subject, if the stylus end is determined to be positioned on a stamp inside the holding member then that stamp is made totally visible (i.e. is brought to the top of the stack in the holding member), otherwise the holding member is moved in accordance with user movement of the stylus 14. A commonly known hidden surface algorithm is used to determine which parts of the stamp and/or icon are currently visible, and hence what area of the desk view 32 must be redrawn. The desk view 32 is preferably redrawn 43 by iterative clipping but other methods are suitable. The hidden surface algorithm is then used to determine which portions of the stamps/icons of the entries below the selected entry 94 must be drawn. After this determination the selected entry 94 is removed from the linked list 92.

At this point after either the redrawing 43 of desk 32 or the changing of the cursor from a magnifying glass to an open hand 39, if the user lifts the stylus 14 from tablet 61, then the tablet task 17 is ended. In the case of having redrawn desk view 32, tablet task 17 is ended after the selected entry 94 is added to the beginning of the linked list 92. If the user, without lifting the stylus 14, moves the stylus end 28, 30 along the tablet surface, the tablet task 17 displays a grasping hand cursor and moves the image of the stamp at 47, but does not yet update the linked list 92. If the user subsequently releases the stamp on top of a processor operation icon of the activated with document type, the tablet task 17 at 49 passes to the supervisor task 15 the necessary information of the stamp and selected processor operation to have that processor operation performed. Thereafter, the application routine which performs the proper operation replaces the stamp to its original location in desk view 32, but on top of any stack at that location

If the user releases the stamp on top of other stamps or non-processor operation icons, the new location is noted in the position field 96 of the associated entry 94 for the stamp in linked list 92. If the new position of the stamp relative to the other stamps/icons is within predefined alignment limits, then a routine for snapping the stamps/icons to each other is performed. Any new aligned stack which results changes the type field 98 of the associated entry 94. Further, the entry 94 corresponding to the newly positioned stamp/icon is made to be first in the linked list 92. It is noted that since there is no single operation to insert a stamp into a stack, the linked list 92 is not only ordered by last accessed but also by stack depth. That is, if the boundaries of the stamps/icons intersect, their order in the linked list 92 determines which is "on top of" the other.

If the detected subject is an icon of a desk accessory or processor operation then it is determined at 31 whether the user is operating the stylus in the "touch and lift" manner to select the processor operation or in the "touch and move" manner to reposition the icon of the processor operation. In the former situation, after the lifting of the stylus is detected, the tablet task 17 determines whether the subject icon represents a processor operation which is selectable without a stamp. If so, then the tablet task 17 passes the necessary information and control to the supervisor task 15. Otherwise the tablet task is ended and started anew with the detection of sufficient pressure on the stylus end.

If the stylus is being operated in the touch and move mode with respect to the subject processor operation icon, then tablet task 17 provides for the display of the icon moving in correspondence to user movement of the stylus. Thereafter if the stylus is lifted such that the subject icon is placed on a stamp then the tablet task 17 determines if the subject icon represents a processor operation which is activated with a stamp (the stamp being underneath the subject icon). If so, then the tablet task 17 passes to the supervisor task 15 control and necessary information for processing the process operation corresponding to the chosen icon and stamp. The application routine subsequently called by the supervisor task 15 replaces the icon to its original location in desk view 32.

The foregoing moving of a stamp or icon during any part of the tablet task 17 is accomplished by known methods which display the whole object in motion from an initial position through intermediate positions to a final position which are dictated by user operation of the stylus. Also such movement is exhibited in a one to one correspondence with user operation of the stylus which in turn provides a direct and natural sense of manipulation of the items on the system desk 36.

While the invention has been particularly shown and described with reference to a preferred embodiment thereof, it will be understood by those skilled in the art that various changes in form and details may be made therein.

For example, though the preferred implementation utilizes a stylus for input and control, the system desk has application to systems which are solely keyboard controlled and to systems which utilize a mouse for input. Also, the system desk may cooperate with application software other than the annotator. For example, the desk may serve as a filing system for conventional word processing and spreadsheet software.

## Claims

1. A data processing apparatus (10) comprising:-
processing means (22) ;
display means (26) responsive to the processing means (22) for displaying a document and entities, said entities including at least a plurality of cursors (64,301), an image entity (34) which represents said document and which is an actual image of one page of said document reduced in size, and an icon (38, 50, 52, 63, 72, 74, 88, 90) representing a function entity which is user selectable to specify an operation to be performed by the processing means (22); and,
an input device (12, 14, 16) coupled to the processing means (22) for specifying positions on the display means (26) and for selecting the operations to be performed by the processing means (22),
wherein manipulation of the input device (12, 14, 16) enables the display to simulate the manipulation of the document which is displayed as said actual image of said document reduced in size by causing movement of said reduced size image (34) of said document and of an icon representing a function entity relative to one another on the display (26) until they overlap to enable the processing means (22) to carry out the operation function represented by the icon on the document represented as said actual image of said document reduced in size, the processor means (22) causing a selected one of the cursors (64, 301) to be displayed as required by the position and operation indicated by the manipulation of the input device (12, 14, 16).

2. A data processing apparatus according to claim 1, in which the input device is a stylus (14) having two ends (28,30), each of which may specify the position on the display means (26), and in which the operation of the processor (22) depends on which end of the stylus (14) is specifying the position on the display means (26).

3. A data processing apparatus according to claim 2, further comprising an electronic tablet (18), and in which the position of the stylus (14) relative to the electronic tablet (18) specifies the position on the display means (26).

4. A data processing apparatus according to claim 3, in which a status input is determined as a function of the distance between the stylus (14) and the tablet (28).

5. A data processing apparatus according to claim 4, in which the status input is in a first predetermined state when the distance between the stylus (14) and the tablet (22) is below a predetermined distance, and is in a second pretermined state when the distance between the stylus (14) and the tablet (22) is greater than the predetermined distance.

6. A data processing apparatus according to claim 5, in which movement of the stylus (14) relative to the tablet (18) when the status input is in the first predetermined state causes movement of said reduced size image (34) of said document or movement of an icon representing a function entity relative to one another on the display (26).

7. A data processing apparatus according to any one of the preceding claims, in which one icon (88) represents a staple operation and another icon (90) represents an unstaple operation, so that, when the staple icon (88) has a position on the display substantially the same as that of a group of reduced images (34), each reduced image (34) thereafter retains the same position with respect to the remainder of the group until the icon (90) representing the unstaple operation has substantially the same position as the group of reduced images (34).

8. A data processing apparatus according to any one of the preceding claims, in which an icon (72) represents a printer function entity.

9. A data processing apparatus according to any one of the preceding claims, in which an icon (91) represents a copy application.

10. A data processing apparatus according to any one of the preceding claims, in which, where two or more reduced images (34) or icons (52,74,88,90) are moved to the same position, they are displayed in overlapping relation on the display.

11. A data processing apparatus according to claim 10, in which where the position of an icon (52,74,88,90) is substantially the same as the position of a reduced image (34), the icon (52,74,88,90) is displayed on top of the reduced image (134).

## Patentansprüche

1. Datenverarbeitungsvorrichtung (10), die folgendes aufweist:
Verarbeitungsmittel (22);
Anzeigemittel (26), die auf die Verarbeitungsmittel (22) ansprechen, um ein Dokument und Gesamtheiten (entities) darzustellen, wobei die erwähnten Gesamtheiten mindestens eine Vielzahl von Cursoren (64, 301) aufweist, eine Bildgesamtheit (Bildentity) (34), die das Dokument repräsentiert und die ein tatsächliches Bild einer Seite des in Größe reduzierten Dokuments ist, und ein Iconzeichen (Icon) (38, 50, 52, 62, 72, 74, 99, 90), welches eine Funktionsgesamtheit oder Funktionsentity repräsentiert, die durch den Benutzer auswählbar ist, um einen durch Prozessor- oder Verarbeitungsmittel (22) auszuführenden Vorgang oder Operation zu spezifizieren; und
eine Eingabevorrichtung (12, 14, 16) gekoppelt mit den Verarbeitungsmitteln (22) zur Spezifizierung von Positionen auf den Anzeigemitteln (26) und zur Auswahl der durch die Verarbeitungsmittel (22) auszuführenden Operationen,
wobei die Manipulation der Eingabevorrichtung (12, 14, 16) die Anzeige in die Lage versetzt, die Manipulation des Dokuments, welches als das erwähnte tatsächliche Bild des Dokuments reduziert in Größe dargestellt ist, zu simulieren, und zwar durch Bewirken der Bewegung des erwähnten, eine reduzierte Größe besitzenden Bildes (34) des Dokumentes und eines Iconzeichens, der eine Funktionsgesamtheit bezüglich einander auf der Anzeige (26) darstellt, und zwar bis sie sich überlappen, um die Verarbeitungsmittel (22) in die Lage zu versetzen, die Operationsfunktion auszuführen, die durch das Iconzeichen auf dem Dokument repräsentiert ist, welches als das erwähnte tätsächliche Bild des erwähnten Dokuments in reduzierter Größe dargestellt ist, wobei die Verarbeitungs- oder Prozessormittel (22) bewirken, daß ein ausgewählter Cursor der Cursoren (64, 301) dargestellt wird, und zwar wie dies angefordert wird durch die Position und die Operation angezeigt durch die Manipulation der Eingabevorrichtung (12, 14, 16).

2. Datenverarbeitungsvorrichtung nach Anspruch 1, wobei die Eingabevorrichtung ein Stift (stylus) (14) ist, der zwei Enden (28, 30) aufweist, von denen jedes die Position der Anzeigemittel (26) spezifizieren oder angeben kann, und wobei die Operation oder der Betrieb des Prozessors (22) davon abhängt, welches Ende des Stiftes (14) die Position auf den Anzeigemitteln (26) angibt oder spezifiziert.

3. Datenverarbeitungsvorrichtung nach Anspruch 2, wobei ferner ein elektronisches Tablett (18) vorgesehen ist, in dem die Position des Stiftes (14) bezüglich des elektronischen Tabletts (18) die Position auf den Anzeigemitteln (26) spezifiziert oder angibt.

4. Datenverarbeitungsvorrichtung nach Anspruch 3, wobei eine Statuseingabegröße bestimmt wird als eine Funktion des Abstandes zwischen dem Stift (14) und dem Tablett (28).

5. Datenverarbeitungsvorrichtung nach Anspruch 4, wobei die Statuseingabegröße sich in einem ersten vorbestimmten Zustand befindet, wenn der Abstand zwischen dem Stift (14) und dem Tablett (22) unterhalb eines vorbestimmten Abstandes liegt, und wobei sich die Statuseingabegröße in einem zweiten vorbestimmten Zustand dann befindet, wenn der Abstand zwischen dem Stift (14) und dem Tablett (22) größer ist als der vorbestimmte Abstand.

6. Datenverarbeitungsvorrichtung nach Anspruch 5, wobei die Bewegung des Stiftes (14) bezüglich des Tabletts (18) dann, wenn die Statuseingangsgröße sich in dem ersten vorbestimmten Zustand befindet, die Bewegung des erwähnten eine reduzierte Größe besitzenden Bildes (34) des Dokumentes oder die Bewegung eines Iconzeichens, der eine Funktiongesamtheit repräsentiert, relativ zueinander auf der Anzeige (26) bewirkt.

7. Datenverarbeitungsvorrichtung nach einem der vorhergehenden Ansprüche, wobei ein Iconzeichen (88) eine Heftoperation repräsentiert und ein andere Iconzeichen (90) eine Endheftoperation repräsentiert, und zwar derart, daß dann wenn das Hefticonzeichen (88) eine Position auf der Anzeige besitzt, die im wesentlichen die gleiche ist, wie die einer Gruppe von reduzierten Bildern (34), jedes reduzierte Bild (34) sodann die gleiche Position bezüglich des Rests der Gruppe beibehält, bis das den Endheftvorgang repräsentierende Iconzeichen (90) im wesentlichen die gleiche Position besitzt wie die Gruppe von reduzierten Bildern (34).

8. Datenverarbeitungsvorrichtung nach einem der vorhergehenden Ansprüche, wobei ein Iconzeichen (72) eine Druckfunktionsgesamtheit repräsentiert.

9. Datenverarbeitungsvorrichtung nach einem der vorhergehenden Ansprüche, wobei ein Iconzeichen (91) einen Kopieranwendungsfall repräsentiert.

10. Datenverarbeitungsvorrichtung nach einem der vorhergehenden Ansprüche, wobei dort, wo zwei oder mehrere reduzierte Bilder (34) oder Iconzeichen (52, 74, 88, 90) die gleiche Position bewegt werden, diese in einer überlappenden Beziehung auf der Anzeige dargestellt werden.

11. Datenverarbeitungsvorrichtung nach Anspruch 10, wobei dort, wo die Position eines Iconzeichens (52, 74, 88, 90) im wesentlichen die gleiche ist wie die Position eines reduzierten Bildes (34), das Iconzeichen (52, 74, 88, 90) auf der Oberseite des reduzierten Bildes (134) angezeigt wird.

## Revendications

1. Appareil de traitement de données (10) comprenant :
un moyen de traitement (22);
un moyen d'affichage (26) répondant au moyen de traitement (22) pour visualiser un document et des entités, lesdites entités comprenant au moins une pluralité de curseurs (64, 301), une entité d'image (34) qui représente ledit document et qui est une image actuelle d'une page dudit document à dimensions réduites, et une icône (38, 50, 52, 63, 72, 74, 88, 90) représentant une entité fonctionnelle qui est sélectionnable par l'utilisateur pour spécifier une opération qui doit être exécutée par le moyen de traitement (22) ; et,
un dispositif d'entrée (12, 14, 16) couplé au moyen de traitement (22) pour spécifier des positions sur le moyen d'affichage (26) et pour sélectionner les opérations qui doivent être exécutées par le moyen de traitement (22),
dans lequel la manipulation du dispositif d'entrée (12, 14, 16) permet à l'affichage de simuler la manipulation du document qui est visualisé comme ladite image actuelle dudit document à dimensions réduites en amenant le déplacement de ladite image à dimensions réduites (34) dudit document et d'une icône représentant une entité fonctionnelle l'une par rapport à l'autre sur l'affichage (26) jusqu'à ce qu'elles se recouvrent afin de permettre au moyen de traitement (22) d'exécuter la fonction opérationnelle représentée par l'icône sur le document représenté comme ladite image actuelle dudit document à dimensions réduites, le moyen de traitement (22) amenant un curseur sélectionné parmi les curseurs (64, 301) à être affiché comme requis par la position et l'opération indiquée par la manipulation du dispositif d'entrée (12, 14, 16).

2. Appareil de traitement de données selon la revendication 1, dans lequel le dispositif d'entrée est un stylet (14) ayant deux extrémités (28, 30) dont chacune peut spécifier la position sur le moyen d'affichage (26) et dans lequel l'opération de traitement (22) est fonction de quelle extrémité du stylet (14) spécifie la position sur le moyen d'affichage (26).

3. Appareil de traitement de données selon la revendication 2, comprenant de plus une tablette électronique (18) et dans lequel la position du stylet (14) par rapport à la tablette électronique (18) spécifie la position sur le moyen d'affichage 26.

4. Appareil de traitement de données selon la revendication 3, dans lequel une entrée d'état est déterminée comme une fonction de la distance entre le stylet (14) et la tablette (28).

5. Appareil de traitement de données selon la revendication 4, dans lequel l'entrée d'état est dans un premier état prédéterminé lorsque la distance entre le stylet (14) et la tablette (22) est au-dessous d'une distance prédéterminée et dans un second état prédéterminé lorsque la distance entre le stylet (14) et la tablette (22) est supérieure à la distance prédéterminée.

6. Appareil de traitement de données selon la revendication 5, dans lequel le déplacement du stylet (14) par rapport à la tablette (18) lorsque l'entrée d'état est dans le premier état prédéterminé entraîne le déplacement de ladite image à dimensions réduites (34) dudit document où le déplacement d'une icône représentant une entité fonctionnelle l'une par rapport à l'autre sur l'affichage (26).

7. Appareil de traitement de données selon l'une quelconque des revendications précédentes, dans lequel une icône (88) représente une opération d'agrafage et une autre icône (90) représente une opération de désagrafage, de sorte que, lorsque l'icône d'agrafage (88) a une position sur l'affichage pratiquement identique à celle d'un groupe d'images réduites (34), chaque image réduite (34) maintient par la suite la même position par rapport au reste du groupe jusqu'à ce que l'icône (90) représentant l'opération de désagrafage ait pratiquement la même position que le groupe d'images réduites (34).

8. Appareil de traitement de données selon l'une quelconque des revendications précédentes, dans lequel une icône (72) représente une entité fonctionnelle d'imprimante.

9. Appareil de traitement de données selon l'une quelconque des revendications précédentes, dans lequel une icône (91) représente une application de copie.

10. Appareil de traitement de données selon l'une quelconque des revendications précédentes, dans lequel, lorsque deux ou plus images réduites (34) ou icônes (52, 74, 88, 90) sont déplacées à la même position, elles sont visualisées en relation de recouvrement sur l'affichage.

11. Appareil de traitement de données selon la revendication 10, dans lequel lorsque la position d'une icône (52, 74, 88, 90) est pratiquement la même que la position d'une image réduite (34), l'icône (52, 74, 88, 90) est visualisée au-dessus de l'image réduite (134.)
